# EUROPÄISCHE PATENTANMELDUNG

(11) **EP 0 862 350 A2**
(43) Veröffentlichungstag der Anmeldung: **02.09.1998**
(21) Anmeldenummer: 98200510.0
(22) Anmeldetag: 18.02.1998
(51) Int. Cl.: H04Q 11/04, H04Q 7/24

(54) **System zur leitungsungebundenen Übertragung eines rahmensynchronisierten Signals zwischen einer Feststation und wenigstens einem mobilen Terminal**

(30) Priorität: 28.02.1997 DE 19708182
(71) Anmelder: Philips Patentverwaltung GmbH, 22335 Hamburg (DE); Koninklijke Philips Electronics N.V., 5621 BA Eindhoven (NL)
(72) Erfinder: Du, Yonggang, Dr.-Ing., Röntgenstrasse 24, 22335 Hamburg (DE); Kraemer, Rolf, Dr.-Ing., Röntgenstrasse 24, 22335 Hamburg (DE)
(74) Vertreter: Volmer, Georg, Dipl.-Ing.

(57) **Zusammenfassung**

Die Erfindung bezieht sich auf ein System zur leitungsungebundenen Übertragung eines rahmensynchronisierten Signals zwischen einer Feststation (1) und wenigstens einem mobilen Terminal (2), die vor der Übertragung von Daten eines synchronen Dienstes zur Festlegung der periodisch auftretenden, jeweils zu verwendenden Rahmen und einer konstanten Anzahl von synchronen Kanälen während der Dauer der Verbindung vorgesehen ist. Die Feststation (1) und wenigstens ein mobiles Terminal (2) sind zur Übertragung von Paketen, die Daten eines asynchronen Dienstes enthalten, in dem rahmensynchronisierten Signal vorgesehen sind. Die Feststation (1) ist für jeden Rahmen zur erneuten Festlegung einer Anzahl von für die Übertragung der Pakete dienenden asynchronen Kanälen vorgesehen.

## Beschreibung

Die Erfindung bezieht sich auf ein System zur leitungsungebundenen Übertragung eines rahmensynchronisierten Signals zwischen einer Feststation und wenigstens einem mobilen Terminal,
die vor der Übertragung von Daten eines synchronen Dienstes zur Festlegung der periodisch auftretenden, jeweils zu verwendenden Rahmen und einer konstanten Anzahl von synchronen Kanälen während der Dauer der Verbindung vorgesehen ist.

Ein solches System ist beispielsweise ein Funkübertragungssystem, welches nach dem GSM-Standard arbeitet und zu dem Ausführungen des GSM-Systems in der Veröffentlichung "Datenübertragung mit GSM", Funkschau, Nr. 3, 1997, Seiten 68 bis 70 enthalten sind. In diesem Artikel wird insbesondere der Datenaustausch zwischen Datennetzen (z.B. Internet, X.25) und mobilen Terminals beschrieben. Hierbei werden, um höhere Übertragungsraten zu erreichen, beispielsweise Zeitschlitze oder Kanäle für einen Dienst zusammengefaßt.

Der Erfindung liegt die Aufgabe zugrunde, ein System zur leitungsungebundenen Übertragung eines rahmensynchronisierten Signals zwischen einer Feststation und wenigstens einem mobilen Terminal zu schaffen, welches eine höhere Flexibilität aufweist.

Die Erfindung wird durch ein System der eingangs genannten Art dadurch gelöst, daß die Feststation und wenigstens ein mobiles Terminal zur Übertragung von Paketen, die Daten eines asynchronen Dienstes enthalten, in dem rahmensynchronisierten Signal vorgesehen sind und
daß die Feststation für jeden Rahmen zur erneuten Festlegung einer Anzahl von für die Übertragung der Pakete dienenden asynchronen Kanälen vorgesehen ist.

Ein solches leitungsungebundenes System kann z.B. ein Funkübertragungssystem, ein Infrarot- oder Ultraschallsystem sein. Eine Feststation besteht in der Regel aus wenigstens einer Basistation, die z.B. den Funkverkehr mit den mobilen Terminals steuert, und kann auch z.B. Vermittlungsvorrichtungen enthalten. Zwischen der Feststation und den mobilen Terminals werden Daten von Diensten übertragen. Hierbei ist zwischen Daten eines synchronen und eines asynchronen Dienstes zu unterscheiden. Daten eines synchronen Dienstes sind z.B. Sprachdaten, d.h. Daten eines Gespräches zwischen wenigstens zwei Teilnehmern, bei dem ein kontinuierlicher Datenfluß ohne längere Verzögerungszeiten erforderlich ist. Daten eines asynchronen Dienstes sind von einem Paketübertragungssystem gelieferte Pakete. Das können beispielsweise Zellen nach dem asynchronen Transfermodus (ATM) sein. Es können auch Daten in der Feststation oder in einem mobilen Terminal in Pakete eingebunden und dann übertragen werden.

Die Feststation legt die synchronen Kanäle für die Dauer einer Verbindung fest, welche für die Aufnahme von synchronen Daten vorgesehen sind. Dabei muß ein solcher synchroner Kanal nicht für jeden aufeinanderfolgenden Rahmen zur Verfügung gestellt werden, sondern kann auch periodisch, z.B. in jedem dritten Rahmen verwendet werden. Falls also eine Verbindung für einen synchronen Dienst aufgebaut ist, müssen dafür entsprechende synchrone Kanäle während der gesamten Verbindungsdauer bereitstehen. Das schließt jedoch nicht aus, daß für diese Verbindung auch verschiedene Kanäle bei verschiedenen Zeitrahmen verwendet werden. So kann z.B. während eines ersten Rahmens ein synchroner Dienst die mit 4, 6 und 7 bezeichneten Kanäle und während eines zweiten Rahmens die mit 5, 6 und 8 bezeichneten Kanäle verwenden.

Der Bereich des Rahmens, der nicht von den synchronen Diensten benötigt wird, wird für die Aufnahme von Paketen oder Daten eines asynchronen Dienstes benutzt. Die Belegung der asynchronen Kanäle wird von der Feststation für jeden Rahmen erneut festgelegt. So kann beispielsweise ein asynchroner Dienst während eines ersten Rahmens die asynchronen Kanäle 4, 8, 9 und 11, während eines zweiten Rahmens die asynchronen Kanäle 4 und 7, während eines dritten Rahmens keinen asynchronen Kanal und während eines vierten Rahmens die asynchronen Kanäle 1, 2 und 4 benutzen. Das System kann durch diese erfindungsgemäßen Maßnahmen sehr viel flexibler als die bekannten Systeme auf Lastveränderungen reagieren.

Ein mobiles Terminal teilt mittels wenigstens eines Steuerkanals des rahmensynchronisierten Signals der Feststation die jeweiligen Anforderungen von Diensten mit. Die Feststation ist zur Festlegung der Kanäle für die Übertragung zwischen Feststation und wenigstens einem mobilen Terminal und zur Mitteilung mittels eines Steuerkanals des rahmensynchronisierten Signals an wenigstens ein mobiles Terminal über die vergebenen Kanäle vorgesehen ist. Außer dem synchronen und asynchronen Kanal enthält das rahmensynchronisierte Signal auch Steuerkanäle, über die Funkverbindungen auf- und abgebaut werden und mit denen Steuerdaten zwischen Feststation und mobilem Terminal ausgetauscht werden. Möglich ist auch, daß Anzahl der Steuerkanäle und die Anzahl der Bits eines Steuerkanals variiert wird. Die Steuerkanäle, die synchronen und asynchronen Kanäle können beliebig im Rahmen verteilt sein. Die einfachste Realisierung ergibt sich, wenn die Steuerkanäle, die synchronen Kanäle und die asynchronen Kanäle jeweils zusammengefaßt sind.

Ein mobiles Terminal und eine Feststation enthalten eine Einfüge- und Entnahmevorrichtung, die unter der Steuerung einer MAC-Steuerschaltung zur Einfügung oder Entnahme von Daten eines synchronen Dienstes in oder aus wenigstens einem synchronen Kanal und von Paketen in oder aus wenigstens einen asynchronen Kanal vorgesehen ist. Die Festtstation ist in Abhängigkeit von der Anzahl der in einer Puffervorrichtung der Feststation oder einem mobilen Terminal befindlichen Zahl und Priorität von Paketen zur Vergabe der zur Verfügung stehenden asynchronen Kanäle pro Rahmen vorgesehen.

Die Feststation oder ein mobiles Terminal fügen ein Wortes in einen synchronen Kanal und eines Paketes in einen asynchronen Kanal ein. Die Feststation zur legt zusätzlich die Anzahl der synchronen und asynchronen Kanäle pro Rahmen fest.

Ferner bezieht sich die Erfindung auch auf eine Feststation und ein mobiles Terminal.

Ausführungsbeispiele der Erfindung werden nachstehend anhand der Figuren näher erläutert. Es zeigen:
Fig. 1 ein Funkübertragungssystem,
Fig. 2 ein Blockschaltbild der in Fig. 1 gezeigten Basisstation oder mobilen Terminals,
Fig. 3 die Rahmenstruktur eines im Funkübertragungssystem nach Fig. 1 verwendeten rahmenstrukturierten Signals und
Fig. 4 ein Schichtenmodell über die Funktionen der Basisstation und der mit ihr über den Funkübertragungsweg gekoppelten mobilen Terminals.

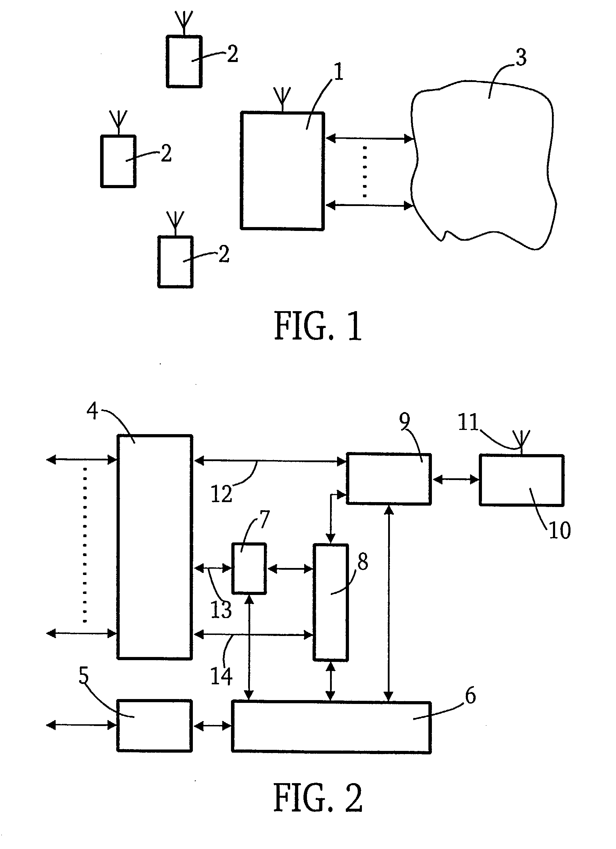

In Fig. 1 ist ein Ausführungsbeispiel eines Funkübertagungssystems dargestellt, welches wenigstens eine Basisstation 1 und mehrere mobile Terminals 2 enthält, welche jeweils über die Basisstation 1 mit anderen mobilen Terminals 2 oder direkt mit anderen Terminals oder über ein Netzwerk 3 mit anderen Teilnehmern Nachrichten austauschen können. Die Funkübertragung zwischen einem mobilen Terminal 2 und der Basisstation 1 kann beispielsweise nach einem TDMA-, FDMA-oder CDMA-Verfahren oder durch eine Kombination dieser oder anderer Verfahren erfolgen. Das Netzwerk 3 kann ein leitungsgebundenes Netzwerk sein, das mit anderen Netzwerken und/oder anderen Basisstationen gekoppelt ist. Ein Beispiel für ein solches drahtgebundenes Netzwerk ist das dienstintegrierte digitale Nachrichtennetz (ISDN) und das Breitband-ISDN, welches nach dem asynchronen Transfermodus (ATM) arbeitet.

Bei einem Netzwerk, welches nach dem asynchronen Transfermodus arbeitet, werden Informationen und Nachrichten mit Hilfe von Zellen übertragen. Eine Zelle enthält ein Kopffeld mit 5 Byte und ein Informationsfeld mit 48 Byte. Die im Kopffeld der Zelle enthaltenen Informationen dienen insbesondere zur Adressierung und zur Durchführung von Vermittlungsfanktionen.

Ein mobiles Terminal enthält außer den für die Funkübertragungsvorrichtung notwendigen Vorrichtungen beispielsweise eine Vorrichtung zur Sprachkommunikation, einen Personal-Computer, eine Workstation usw.

Ein Blockschaltbild der Basisisstation 1 oder eines mobilen Terminals 2 ist in Fig. 2 näher dargestellt. Dieses enthält einen Dienstanpassungsanordnung 4, eine Funkmanagementanordnung 5, eine MAC-Steuerschaltung 6 (MAC = medium access control), eine Umsetzervorrichtung 7, eine Puffervorrichtung 8, eine Einfüge- und Entnahmevorrichtung 9 und eine Funkvorrichtung 10 mit angeschlossener Antenne 10. Die Dienstanpassungsanordnung 4 erhält vom Netzwerk 3, falls die Anordnung nach Fig. 2 Bestandteil der Basisstation 1 ist, oder von bestimmten Anordnungen (Personal Computer, Vorrichtung zur Sprachkommunikation usw.), falls die Anordnung nach Fig. 2 Bestandteil eines mobilen Terminals 2 ist, verschiedene Datenströme. Solche Datenströme können z.B. plesiochrone Daten verschiedener Hierachiestufen, Daten der synchronen digitalen Hierachie, Multiplexdaten mit verschiedenen Bitraten (z.B. 64 kBit/s, 2 Mbit/s), Daten nach dem Internet Protokoll (IP), Telefaxdaten, Daten gemäß dem Protokoll X.25, Daten gemäß dem Frame Relay Protokoll, ein ATM-Zellenstrom usw sein. Der Dienstanpassungsanordnung 4 kann beispielsweise als Multiplexer ausgebildet sein und die verschiedenen Datenströme zu insgesamt drei Basisdatenströmen 12 bis 14 zusammenfassen. Der Datenstrom 12 enthält alle synchronen Daten, d.h. beispielsweise Daten eines Gespräches (Sprachdaten) zwischen wenigstens zwei Teilnehmern, bei dem ein kontinuierlichen Datenfluß ohne längere Verzögerungszeiten erforderlich ist. Des weiteren erzeugt die Dienstanpassungsanordnung 4 einen asynchronen Datenstrom 13, der Daten eines Dienstes enthält, bei denen kein kontinuierlicher Daten-fluß (z.B. Internet, X. 25, Telefax usw.) erforderlich ist. Der dritte Datenstrom 14 stellt einen ATM-Zellenstrom dar.

Die Funkmanagementanordnung 5, welche als Mikroprozessorsystem ausgebildet sein kann, verarbeitet verbindungsrelevante Daten (Signalisierungsdaten). Zum Verbindungsaufbau zwischen der Basisstation und einem mobilen Terminal tauschen die jeweiligen Funkmanagementanordnung 5 der Basisstation 1 und eines mobilen Terminals Daten über die jeweilige MAC-Steuerschaltung 6, die Einfüge- und Entnahmevorrichtung 9 und die Funkvorrichtung 10 aus. Ferner ist die Funkmanagementanordnung 5 u.a. dazu vorgesehen, Kanalmessungen z.B. mittels Testdaten durchzuführen, bei schlechter Funkübertragung Trägerfrequenzen gegebenfalls zu ändern.

Die MAC-Steuerschaltung 6, die beispielsweise als Mikroprozessorsystem realisiert ist und die zum Steuern der Schaltungselemente 7, 8 und 9 anhand von verbindungsrelevanten Daten vorgesehen ist, die von der Funkmanagementanordnung 5 geliefert werden. Die asynchronen Daten 13 werden mittels der Umsetzervorrichtung 7 in einen ATM-Zellenstrom umgesetzt und zu der Puffervorrichtung 8 zur Zwischenspeicherung gesendet. Die MAC-Steuerschaltung 6 liefert hierbei der Umsetzervorrichtung 7 Steuerdaten für das Kopffeld einer zu bildenden Zelle. Des weiteren bildet die Umsetzervorrichtung 7 aus dem von der Puffervorrichtung 8 empfangenen ATM-Zellenstrom asynchrone Daten 13, die zur Dienstanpassungsanordnung 4 geliefert werden. Außer den in ATM-Zellen umgesetzten asynchronen Daten speichert die Puffervorrichtung 8 auch Zellen des ATM-Zellenstroms 14, die von der Dienstanpassungsanordnung 4 empfangen worden sind. Die Puffervorrichtung 8 erhält auch Daten von einer Einfüge- und Entnahmevorrichtung 9.

Die von der Puffervorrichtung 8 abgegebenen Zellen und die von der Dienstanpassungsanordnung 4 gelieferten synchronen Sprachdaten 12 werden mittels der Einfüge- und Entnahmevorrichtung 9 in ein rahmenstrukturiertes Signal eingefügt. Dieses rahmenstrukturierte Signal wird an die Funkvorrichtung 10 geliefert, die einen Codec, ein Modem und einen Hochfrequenzteil enthält. Diese Funkvorrichtung 10 sendet und empfängt Hochfrequenzsignale über die Antenne 11. Aus dem in der Funkvorrichtung 10 aus dem empfangenen Hochfrequenzsignal gebildeten rahmenstrukturierten Signal werden in der Einfüge- und Entnahmevorrichtung 9 synchrone Daten 12 und ATM-Zellen entnommen und die synchronen Daten 12 zur Dienstanpassungsanordnung 4 und die ATM-Zellen zur Puffervorrichtung 8 geliefert.

Die MAC-Steuerschaltung 6 erhält von der Funkmanagementanordnung 5, wie oben erwähnt, verbindungsrelevante Daten. Jedem Datenstrom 12, 13 und 14 sind Signalisierungsdaten zugeordnet, die von einer hier nicht dargestellten Signalisierungsschnittstelle empfangen werden. Den synchronen Daten 12 sind dabei die entsprechenden verbindungsrelevanten Daten zeitlich entsprechend zugeordnet. Die verbindungsrelevanten Informationen der ATM-Zellen sind im Kopffeld enthalten. Nach Speicherung einer Zelle in der Puffervorrichtung 8 werden die verbindungsrelevanten Daten aus dem Kopffeld der Zelle entnommen und in der MAC-Steuerschaltung 6 bereitgestellt. Weitere verbindungsrelevante Daten erhält die MAC-Steuerschaltung 6 von der Einfüge- und Entnahmevorrichtung 9 von über die Funkvorrichtung 10 empfangenen rahmenstrukturierten Signal. Zum Aufbau von Funkverbindungen tauscht die MAC-Steuerschaltung 6 von der Funkmanagementanordnung 5 erhaltene Steuerdaten mit der Einfüge- und Entnahmevorrichtung 9 aus.

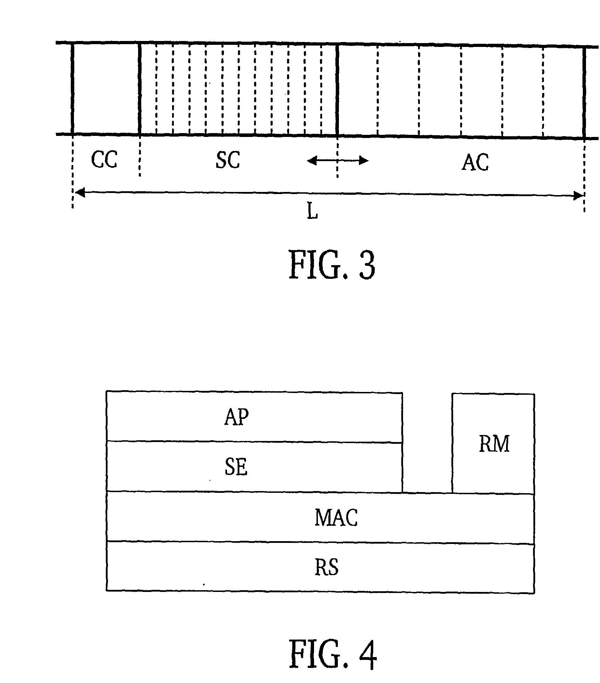

Die Rahmenstruktur des rahmenstrukturierten Signals ist in Fig. 3 dargestellt. Der Rahmen enthält wenigstens einen Steuerkanal oder Steuerzeitschlitz CC, wenigstens einen synchronen Kanal oder synchronen Zeitschlitz SC und wenigstens einen asynchronen Kanal oder asynchronen Zeitschlitz AC. Ein synchroner Kanal SC enthält ein Wort einer den synchronen Daten zugeordneten Verbindung und gegebenenfalls zugeordnete Kontrollinformationen zum Fehlerschutz (z.B. CRC-Daten, CRC = cyclic redundancy check), zur Synchronisation usw. Ein Wort kann einem oder mehreren Bytes entsprechen. Es sei angenommen, daß ein Wort k = 8 Bits hat und daß die Zeitdauer eines Rahmens L = 10 ms beträgt. Einem synchronen Kanal SC weist dann eine Bitrate von R = k/L = 0,8 kBit/s auf. Falls in jedem aufeinanderfolgenden Rahmen in einem synchronen Kanal Daten eines synchronen Dienstes übertragen werden sollen, ist die minimale Bitrate Rₘᵢₙ = 0,8 kBit/s. Diese minimale Bitrate kann noch weiter reduziert werden, wenn nicht in jedem Rahmen in einem synchronen Kanal, aber perioisch Daten eines synchronen Dienstes übertragen werden. Falls Daten nur in jedem vierten Rahmen übertragen werden, ergibt sich eine Bitrate von Rₘᵢₙ = 0,2 kBit/s.

Ein asynchroner Kanal AC enthält genau eine ATM-Zelle von 53 Bytes und gegebenenfalls zugeordnete Kontrollinformationen. Wie oben schon erwähnt, sind die asynchronen Kanäle AC im wesentlichen dafür vorgesehen, Daten von asynchronen Diensten (z.B. Telefax, Internet usw.) in ATM-Zellen über die Funkstrecke zu übertragen.

Die Anzahl der synchronen und asynchronen Kanäle SC und AC ist nicht festgelegt. In Abhängigkeit von der Verkehrsbelastung werden von der MAC-Steuerschaltung 6 in der Basisstation 1 die synchronen und asynchronen Kanäle SC und AC vergeben. Im Extremfall können nur synchrone Kanäle oder nur asynchrone Kanäle verwendet werden.

Die Steuerkanäle CC werden dazu verwendet, um Steuerdaten zwischen der Basisstation 1 und den mobilen Terminals 2 auszutauschen. Welche Steuerdaten die Kontrollkanäle enthalten können, kann beispielsweise der Veröffentlichung "WATMnet: A Prototype Wireless ATM System for Multimedia Personal Communication", Raychaudhuri et al., IEEE JOURNAL ON SELECTED AREAS IN COMMUNICATIONS, Vol. 15, NO. 1, January 1977, Seiten 83 bis 95. Über diese Steuerkanäle CC bekommt die MAC-Steuerschaltung 6 der Basisstation 1 die Information von den mobilen Terminals 2, wieviele synchrone und asynchrone Kanäle jeweils benötigt werden. Mit Hilfe der Informationen von den mobilen Terminals 2 und weiterer Informationen über bestehende und aufzubauende Verbindungen von der Funkmanagementanordnung 5 der Basisstation 1 legt die MAC-Steuerschaltung 6 der Basisstation die Verteilung der synchronen und asynchronen Kanäle SC und AC fest. Ein einmal für eine Verbindung zugewiesener synchroner Kanal SC muß während der gesamten Verbindung unverändert bestehen bleiben. Beispielsweise werden für die Übertragung von synchronen Daten oder die Benutzung eines synchronen Dienstes drei synchrone Kanäle SC benötigt. Das können z.B. die mit 1, 3 und 10 bezeichneten synchronen Kanäle SC sein. Diese synchronen Kanäle sind bis zum Ende der Verbindung diesem synchronen Dienst zugeordnet. Erst danach können sie zur Übertragung anderer synchroner Daten wieder verwendet werden. Es ist auch möglich, daß ein synchroner Dienst während der Übertragung z.B. zuerst den mit 10 bezeichneten synchronen Kanal SC und nach mehreren Rahmen den mit 8 bezeichneten synchronen Kanal SC verwendet. Die MAC-Steuerschaltung 6 muß also jeweils prüfen, wieviele Kanäle von den derzeit bestehenden synchronen Diensten benötigt werden und dafür entsprechende synchrone Kanäle in einem Rahmen bereitstellen.

Die Vergabe der asynchronen Kanäle AC wird gegenüber der Vergabe der synchronen Kanäle SC flexibler gestaltet. So können in einem ersten Rahmen einem Dienst, der die ATM-Zellen zur Übertragung seiner Daten verwendet (asynchroner Dienst), beispielsweise vier asynchrone Kanäle AC und in einem zweiten darauffolgenden Rahmen ein asynchroner Kanal AC zur Verfügung gestellt werden. Die Vergabe der asynchronen Kanäle wird dynamisch gestaltet. Ein mobiles Terminal 2 sendet über einen Steuerkanal CC eine Mitteilung, daß er eine bestimmte Anzahl von Zellen zu übertragen hat. Die Basisstation 1 teilt dem betreffenden mobilen Terminal 2 dann über einen Steuerkanal mit, welche asynchronen Zeitschlitze für die Übertragung der Zellen zu Verfügung gestellt werden. Hierbei können auch die einzelnen Zellen zugewiesene Prioritäten berücksichtigt werden. Zum Beispiel kann die Basisstation 1 einem mobilen Terminal 2 für einen Rahmen i die mit 2 und 3 bezeichneten asynchronen Kanäle und für einen Rahmen i+1 die mit 2, 4 und 6 bezeichneten asynchronen Kanäle zuweisen. Eine solche Zuweisungsstrategie wird auch für die umgekehrte Richtung von der Basisstation 1 zu einem mobilen Terminal 2 verwendet.

Die synchronen und asynchronen Kanäle sind für eine Übertragung von Daten von der Basisstation 1 zu einem mobilen Terminal 2 (Hinverbindung, downlink) und für eine Übertragung von Daten von einem mobilen Terminal 2 zur Basisstation 1 (Rückverbindung, uplink) vorgesehen. Die Kanäle müssen dabei nicht gleichmäßig auf die Hin- und Rückverbindungen verteilt sein.

Die Einfüge- und Entnahmevorrichtung 9 wird von der MAC-Steuerschaltung 6 so gesteuert, daß diese die synchronen und asynchronen Daten in die entsprechenden Kanäle SC und AC und die Steuerdaten in die entsprechenden Steuerkanäle CC einfügen, bzw. daraus entnehmen kann. Aufgrund von Wartezeiten in der Einfügeund Entnahmeschaltung 9 werden die synchronen Daten 4 in einem nicht dargestellten Wartespeicher zwischengespeichert. Eine solche Pufferung von ATM-Zellen ist in der Einfüge- und Entnahmeschaltung 9 nicht mehr notwendig, da die Zellen zu den jeweils vorgesehenen Zeitpunkten aus der Puffervorrichtung 8 ausgelesen werden, nachdem sie von der MAC-Steuerschaltung 6 zur Einfügung in einen asynchronen Kanal freigegeben worden sind.

Die verschiedenen Funktionen der Basisstation 1 bzw. eines mobilen Terminals 2 lassen sich zusätzlich an dem in Fig. 4 dargestellten Schichtenmodell erläutern. Die unterste Schicht RS (radio subsystem), die beispielsweise im OSI-Schichtenmodell als physikalische Schicht bezeichnet wird, bezieht sich auf die Funkübertragung und kann der Funkvorrichtung 10 und Antenne 11 zugeordnet werden. Die zweite Schicht MAC (medium access control) steuert die Kanalzuweisung und betrifft die Schaltungselemente 6 bis 9. Da das Schaltungselement 6 der MAC-Schicht zugeordnet ist, wird sie auch als MAC-Steuerschaltung 6 bezeichnet. Die dritte Schicht SE (service adaptation) dient zur Anpassung der ankommenden und abgehenden Daten zu dem Netzwerk 3 (Basisstation 1) bzw. weiteren Schaltungselementen, wie Personal-Computer, Telefax usw. (mobiles Terminal 2). Die oberste oder vierte Schicht AP (multimedia applications) bezieht sich auf die verschiedenen Kommunikationsdienste, die über das Funkübertragungssystem abgewickelt werden können. Parallel zur dritten und vierten Schicht ist eine weitere Funktion vorhanden, die als Schicht RM (radio management and control) bezeichnet wird, und der Funkmanagementanordnung 5 zugeordnet ist.

## Patentansprüche

1. System zur leitungsungebundenen Übertragung eines rahmensynchronisierten Signals zwischen einer Feststation (1) und wenigstens einem mobilen Terminal (2), die vor der Übertragung von Daten eines synchronen Dienstes zur Festlegung der periodisch auftretenden, jeweils zu verwendenden Rahmen und einer konstanten Anzahl von synchronen Kanälen während der Dauer der Verbindung vorgesehen ist, dadurch gekennzeichnet,
daß die Feststation (1) und wenigstens ein mobiles Terminal (2) zur Übertragung von Paketen, die Daten eines asynchronen Dienstes enthalten, in dem rahmensynchronisierten Signal vorgesehen sind und
daß die Feststation (1) für jeden Rahmen zur erneuten Festlegung einer Anzahl von für die Übertragung der Pakete dienenden asynchronen Kanälen vorgesehen ist.

2. System nach Anspruch 1, dadurch gekennzeichnet,
daß ein mobiles Terminal (2) zur Mitteilung mittels wenigstens eines Steuerkanals des rahmensynchronisierten Signals an die Feststation über die jeweiligen Anforderungen von Diensten vorgesehen ist und
daß die Feststation (1) zur Festlegung der Kanäle für die Übertragung zwischen Feststation (1) und wenigstens einem mobilen Terminal (2) und zur Mitteilung mittels eines Steuerkanals des rahmensynchronisierten Signals an wenigstens ein mobiles Terminal (2) über die vergebenen Kanäle vorgesehen ist.

3. System nach Anspruch 1, dadurch gekennzeichnet,
daß ein mobiles Terminal (2) und eine Feststation (1) eine Einfüge- und Entnahmevorrichtung (9) enthalten, die unter der Steuerung einer MAC-Steuerschaltung (6) zur Einfügung oder Entnahme von Daten eines synchronen Dienstes in oder aus wenigstens einem synchronen Kanal und von Paketen in oder aus wenigstens einen asynchronen Kanal vorgesehen ist.

4. System nach Anspruch 1, dadurch gekennzeichnet,
daß die Festtstation (1) in Abhängigkeit von der Anzahl der in einer Puffervorrichtung (8) der Feststation (1) oder einem mobilen Terminal (2) befindlichen Zahl und Priorität von Paketen zur Vergabe der zur Verfügung stehenden asynchronen Kanäle vorgesehen ist.

5. System nach Anspruch 1, dadurch gekennzeichnet,
daß die Feststation (1) oder ein mobiles Terminal (2) zur Einfügung eines Wortes in einen synchronen Kanal und eines Paketes in einen asynchronen Kanal vorgesehen sind und
daß die Feststation (1) zur Festlegung der Anzahl der synchronen und asynchronen Kanäle pro Rahmen vorgesehen ist.

6. Feststation (1) in einem System zur leitungsungebundenen Übertragung eines rahmensynchronisierten Signals zwischen der Feststation (1) und wenigstens einem mobilen Terminal (2),
die vor der Übertragung von Daten eines synchronen Dienstes zur Festlegung der periodisch auftretenden, jeweils zu verwendenden Rahmen und einer konstanten Anzahl von synchronen Kanälen während der Dauer der Verbindung vorgesehen ist, dadurch gekennzeichnet,
daß die Feststation (1) mit wenigstens einem mobilen Terminal (2) zur Übertragung von Paketen, die Daten eines asynchronen Dienstes enthalten, in dem rahmensynchronisierten Signal vorgesehen ist und
daß die Feststation (1) für jeden Rahmen zur erneuten Festlegung einer Anzahl von für die Übertragung der Pakete dienenden asynchronen Kanälen vorgesehen ist.

7. Mobiles Terminal (2) in einem System zur leitungsungebundenen Übertragung eines rahmensynchronisierten Signals zwischen einer Feststation (1) und dem mobilen Terminal (2),
welches zum Empfang einer Mitteilung von der Feststation vor der Übertragung von Daten eines synchronen Dienstes vorgesehen ist, in welcher die jeweils zu verwendenden, periodisch auftretenden Rahmen und die dann zu verwendenden synchronen Kanäle während der Dauer der Verbindung enthalten ist, dadurch gekennzeichnet,
daß das mobile Terminal (2) zur Übertragung von Paketen an die Feststation (1), die Daten eines asynchronen Dienstes enthalten, in dem rahmensynchronisierten Signal vorgesehen ist und
daß das mobile Terminal (2) vor jedem Rahmen zum Empfang einer weiteren Mitteilung von der Feststation (1) vorgesehen ist, in der jeweils die zu verwendenden asynchronen Kanäle für die Übertragung der Pakete enthalten ist.
